# EUROPEAN PATENT SPECIFICATION

(11) **EP 2 096 805 B1**
(45) Date of publication and mention of the grant of the patent: **25.08.2010**
(21) Application number: 08003722.9
(22) Date of filing: 28.02.2008
(51) Int. Cl.: H04L 12/56

(54) **Apparatus and method for complexity reduction**
Vorrichtung und Verfahren zur Komplexitätsreduktion
Appareil et procédé pour une réduction de complexité

(43) Date of publication of application: 02.09.2009
(73) Proprietor: NTT DoCoMo, Inc., Chiyoda-ku Tokyo 100-6150 (JP)
(72) Inventor: Saul, Andreas, 80686 München (DE)
(74) Representative: Zinkler, Franz

(56) References cited:
- SAI KIT LAI ET AL: "Adaptive tracking of optimal bit and power allocation for OFDM systems in time-varying channels" WIRELESS COMMUNICATIONS AND NETWORKING CONFERENCE, 1999. WCNC. 1999 IE EE NEW ORLEANS, LA, USA 21-24 SEPT. 1999, PISCATAWAY, NJ, USA,IEEE, US, 21 September 1999 (1999-09-21), pages 776-780, XP010353574 ISBN: 978-0-7803-5668-9
- WOOHYUN SEO ET AL: "Low complexity dynamic channel allocation by efficient swapping process for OFDMA systems" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 2, 25 September 2005 (2005-09-25), pages 1089-1092, XP010878653 ISBN: 978-0-7803-9152-9
- YING JUN ZHANG ET AL: "Optimizing power and resource management for multiuser MIMO/OFDM systems" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 1, 1 December 2003 (2003-12-01), pages 179-183, XP010677869 ISBN: 978-0-7803-7974-9
- CHEONG YUI WONG ET AL: "A real-time sub-carrier allocation scheme for multiple access downlink OFDM transmission" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 2, 19 September 1999 (1999-09-19), pages 1124-1128, XP010353078 ISBN: 978-0-7803-5435-7

## Description

The present invention relates to communications systems and, in particular, to apparatuses and methods for resource allocation for a plurality of users in a communications system.

Wireless communication networks are increasingly being relied upon to provide broadband services to users, such as wireless Internet access and real-time video. Several challenges exist in the development and deployment of broadband wireless communications systems. Broadband services require reliable and high data rate communications under adverse conditions, such as hostile mobile environments, limited available spectrum and inter-symbol interference (ISI) caused by multi-path-fading of the mobile radio channel. Orthogonal frequency division multiplexing (OFDM) has been identified to be one of the most promising solutions to address the ISI problem.

Orthogonal frequency-division multiple access (OFDMA) is a multi-user version of the OFDM digital modulation scheme. Multiple access is achieved in OFDMA by assigning sub-sets of sub-carriers to individual users. This allows simultaneous relatively low-data rate transmission from a base station (BS) to a plurality of users. Based on feedback information from the users about their channel conditions, adaptive user-to-sub-carrier assignment can be achieved in OFDMA-based communications systems. If the assignment or resource allocation is achieved in a sufficiently fast manner, this further improves the OFDM robustness to fast-fading and narrow-band co-channel interference and makes it possible to achieve an even better spectral efficiency. In a resource allocation process a different number of sub-carriers can be assigned to each of the plurality of users to support differentiated quality of service (QoS) for each user, i.e. to control a data rate and error probability individually for each user.

For a single user OFDM communications system, an approach known as the "water-filling" approach can be used to find the sub-carrier and bit allocation solution that minimizes a total transmit power for communicating with said single user. The water-filling algorithm optimizes sub-carrier and bit allocation based on requirements of a single user without taking into consideration the effects of the single user on resource allocation for all of a plurality of users. Therefore, in multi-user OFDM systems, the sub-carrier and bit allocation, which is best for one user, may cause undue interference to other users.

In OFDMA communications systems, sub-carrier and bit allocation is much more complex than in single user OFDM communications systems, in particular, because the best sub-carrier (in terms of channel gain) of one user could also be the best sub-carrier of other users. Several users should not use the same sub-carrier at the same time, because the mutual interference between users using the same sub-carrier will decrease data rates, that is, data-throughput. There have been numerous researches on algorithms for sub-carrier and bit allocation in multi-user OFDM systems. Those resource allocation algorithms can be categorized into general types: First, static sub-carrier allocation and, second, dynamic sub-carrier allocation.

Two typical static sub-carrier allocation algorithms are OFDM time-division multiple access (OFDM-TDMA) and OFDM frequency division multiple access (OFDM-FDMA). In OFDM-TDMA, each user is assigned one or more predetermined time slots e.g. one or more OFDM-symbols, and can use all sub-carriers in the assigned time slots. In OFDM-FDMA, each user is assigned one or several pre-determined sub-carriers per time slot. In these static schemes, sub-carrier allocations are predetermined and do not take advantage of the knowledge of instantaneous channel gains of the sub-carriers.

Dynamic sub-carrier allocation schemes consider instantaneous channel gains for sub-carrier and bit allocation. Most of these dynamic resource allocation schemes result in rather complex solutions that can be found in an iteration process. A common class of OFDMA schedulers starts an iteration process to find the best resource allocation for a given time interval by determining an initial resource allocation and by iteratively improving the schedule according to some optimization criterion. However, performing many iterations may cause a high computational complexity and may be prohibitive for real-time applications.

The publication SAI KIT LAI et al.: "Adaptive tracking of optimal bit and power allocation for OFDM systems in time-varying channels" WIRELESS COMMUNICATIONS AND NETWORKING CONFERENCE; 1999. WCNC. 1999 IE EE NEW ORLEANS, LA, USA 21-24 SEPT. 1999, PISCATAWAY, NJ USA, IEEE, US, 21 September 1999 (1999-09-21), pages 776-780, also relates to a concept for resource allocation among a plurality of users. Thereby, the proposed algorithm utilizes a previous bit allocation information for initialization, and then iteratively refines the allocation until it reaches the optimal solution. It is found that the old resource allocation can still provide valuable information for obtaining the new optimal resource allocation. Instead of solving the allocation problem anew every time the allocation needs to be modified, an efficient adaptive tracking algorithm is proposed to update the allocation as the channel varies. The proposed "intelligent successive refinement" (ISR) algorithm uses the previous resource allocation indirectly after a remapping process. That is, the described algorithm uses the previous bit allocation but the mapping to the OFDM sub-channels is different. Further, it is stated that even when the channel changes rapidly, the described adaptive tracking algorithm can reach the optimal solution with much less computation than algorithms which solve the resource allocation problem from scratch. Hence, the described concept in document D1 always uses the previous resource allocation as the initial resource allocation for a current resource allocation iteration.

However, there might be scenarios where taking the previous resource allocation as a basis for arriving at an optimized current resource allocation is not the most promising solution.

Hence, it is the objective of the present invention to improve the scheduling of resource blocks to a plurality of users in multiple access communications systems by reducing a number of iterations needed for the resource allocation.

This objective can be solved by an apparatus for resource allocation for a plurality of users according to claim 1, a method for resource allocation for a plurality of users according to claim 15 and a computer-program according to claim 16.

The present invention is based on the finding that a resource allocation for a plurality of users of a current user configuration with the associated sub-carrier channel gains and QoS requirements, which shall be denoted as current communication link configuration in the sequel, can be improved with regard to an amount of iteration steps needed for performing said resource allocation by performing said resource allocation based on a previous resource allocations associated to a previous communication link configuration, i.e. a previous user configuration with associated sub-carrier channel gains and QoS requirements. By starting with a close-to-optimum resource allocation, the number of required iterations for the iteration process can be significantly reduced under reasonably favorable conditions.

Embodiments of the present invention provide an apparatus for resource allocation among a plurality of users for a current communication link configuration in a communications system, wherein the apparatus comprises a memory for storing a previous resource allocation associated to a previous communication link configuration and an iteration controller for performing an iteration based on an optimization criterion and an initial resource allocation, wherein the iteration controller is configured to determine an optimized resource allocation for the current communication link configuration by using the stored previous resource allocation as the initial resource allocation for the current communication link configuration. The iteration controller comprises a comparator for comparing the current communication link configuration to the stored previous communication link configuration, such that, depending on a comparison result of the comparator, either the stored previous resource allocation is used as the initial resource allocation or an initial resource allocation is computed from scratch.

According to a further aspect, the present invention provides a method for resource allocation among a plurality of users for a current communication link configuration in a communications system, wherein the method comprises storing a previous resource allocation associated to a previous communication link configuration and performing an iteration based on an optimization criterion and an initial resource allocation for determining an optimized resource allocation for the current communication link configuration, the optimized resource allocation meeting the optimization criterion, characterized in that the current communication link configuration is compared to the stored previous communication link configuration, such that, depending on a comparison result, either the stored previous resource allocation is used as the initial resource allocation or an initial resource allocation is computed from scratch.

Embodiments of the present invention can be used to determine an allocation of resources, such as e..g. sub-carriers or modulations schemes, in a multiple access communications system. For example, the present invention can be used for an efficient sub-carrier allocation for multiple access in OFDM communications systems. By already starting with a close-to-optimum resource allocation for a current user scenario, a number of required iterations to arrive at the optimal resource allocation with regard to the optimization criterion can be significantly reduced. In case it is not appropriate to use a stored previous resource allocation associated to a previous user scenario as the initial resource allocation for the current user scenario, the initial resource allocation for the current user scenario can be determined by a conventional resource allocation algorithm, for example, the algorithm proposed in "A Real-time Sub-carrier Allocation Scheme for Multiple Access Downlink OFDM Transmission", Wong et al., 1999.

Preferred embodiments of the present invention are described in detail with respect to the following Figures, in which:
Fig. 1 shows a schematic block diagram of an OFDMA communications system with an apparatus for resource allocation, according to an embodiment of the present invention;
Fig. 2 shows a block diagram of an apparatus for resource allocation for a plurality of users in a communications system, according to an embodiment of the present invention;
Fig. 3 shows a schematic flow chart of a method for resource allocation for a plurality of users in a communications system, according to an embodiment of the present invention;
Fig. 4 shows a more detailed flow chart of a method for resource allocation among a plurality of users in a communications system, according to an embodiment of the present invention;
Fig. 5 shows a flow chart of a step of comparing a current communication link configuration to a stored previous communication link configuration according to an embodiment of the present invention;
Fig. 6 shows with which probability iteration processes according to embodiments of the present invention end after a related number of iterations; and
Fig. 7 shows a comparison of data rates achievable with resource allocations according to embodiments of the present invention.

Embodiments of the present invention can be applied to multiple access communications systems in general and are not limited to a special kind of such communications systems. However, embodiments of the present invention shall be described in the following with regard to a wireless OFDMA communications systems.

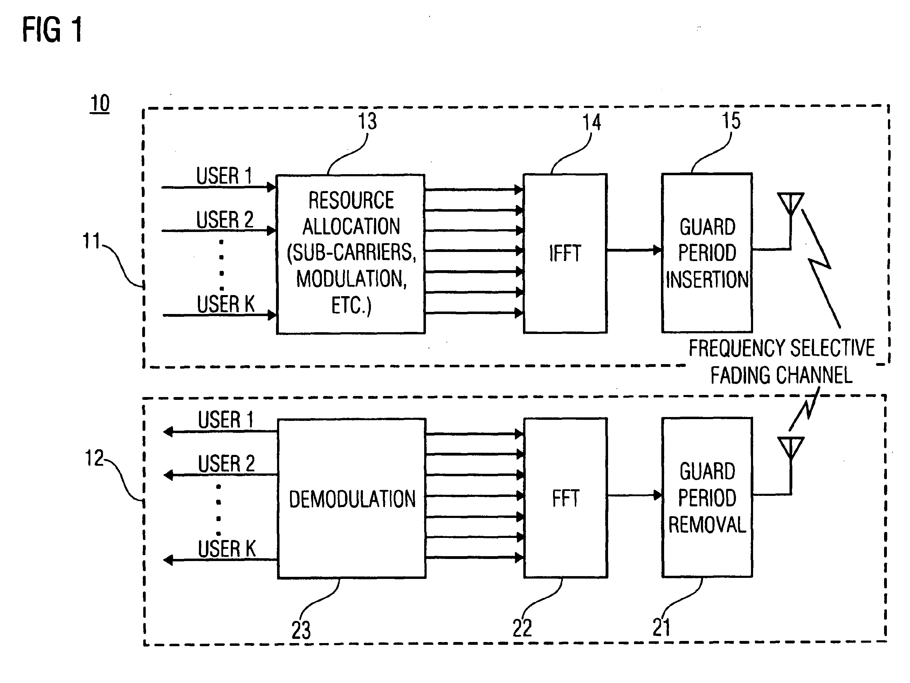

A schematic block diagram of an OFDMA communications system 10 is exemplarily shown in Fig. 1.

The multi-user OFDMA system 10 generally comprises a transmit module 11, which is most likely to be incorporated in a base station. However, it can be comprised by a mobile station as well. Further, the multi-user OFDMA system 10 comprises a receive module 12, which is most likely to be incorporated in a mobile station. However, it can be within a base station as well. The transmit module 11 comprises a module 13 for resource allocation among a plurality of users, an inverse Fast Fourier transform (IFFT) module 14 and a guard period insertion module 15. The resource allocation module 13, the IFFT module 14 and the guard period insertion module 15 facilitate transmission of information signals from the transmit module 11 to the plurality of users.

The resource allocation module 13 may determine an assignment of sub-carriers to users and the number of bits to be transmitted on each assigned sub-carrier. Based on the number of bits to be transmitted on a sub-carrier, the resource allocation module 13 may further apply a corresponding modulation scheme and determine an appropriate transmit power level for the sub-carrier as well.

The IFFT module 14 transforms complex output symbols of the resource allocation module 13 into time domain samples by using an IFFT. The guard period insertion module 15 inserts a guard period to the end of each OFDM time domain symbol in order to alleviate inter-symbol interference prior to transmission via a first RF module and antenna 26.

The receive module 12 comprises a second RF module and antenna 17, a guard period removal module 21, a Fast Fourier transform (FFT) module 22 and a demodulator 23. The guard period removal module 21 removes the guard period. Then, the FFT module 22 transforms received time domain samples into modulated symbols. Finally, the demodulation module 23 applies corresponding demodulation schemes to restore user data transmitted from the transmitter module 11 over the mobile radio channel. Although there is a general correspondence between the transmit module 11 and the receive module 12, their respective functions are necessarily different.

Let K (K ≥ 1) be the number of users supported by the OFDMA communications system 10 and that N (N ≥ 1) be the number of sub-carriers. In addition, let Sₖ denote the number of sub-carriers required by user k (k=1,...,K). Sₖ may thereby be related to the QoS demanded by said user k. Let us assume that each sub-carrier has a bandwidth, which is much smaller than the coherence bandwidth of the communication link or channel and that the instantaneous channel gain α_{k,n} of each sub-carrier n (n=1, ..., N) for every user k (k=1, ...,K) is known to the transmit module 11, e.g. due to feedback information from the K users.

The transmit module 11 comprises, according to embodiments of the present invention, the apparatus 13 for resource allocation among the plurality of users for a current communication link configuration, wherein the current communication link configuration corresponds to a current resource allocation time interval, e.g. an OFDMA symbol. The apparatus 13 may allocate modulation schemes and appropriate transmit powers to each sub-carrier n (n=1,...,N) for every user k (k=1,...,K).

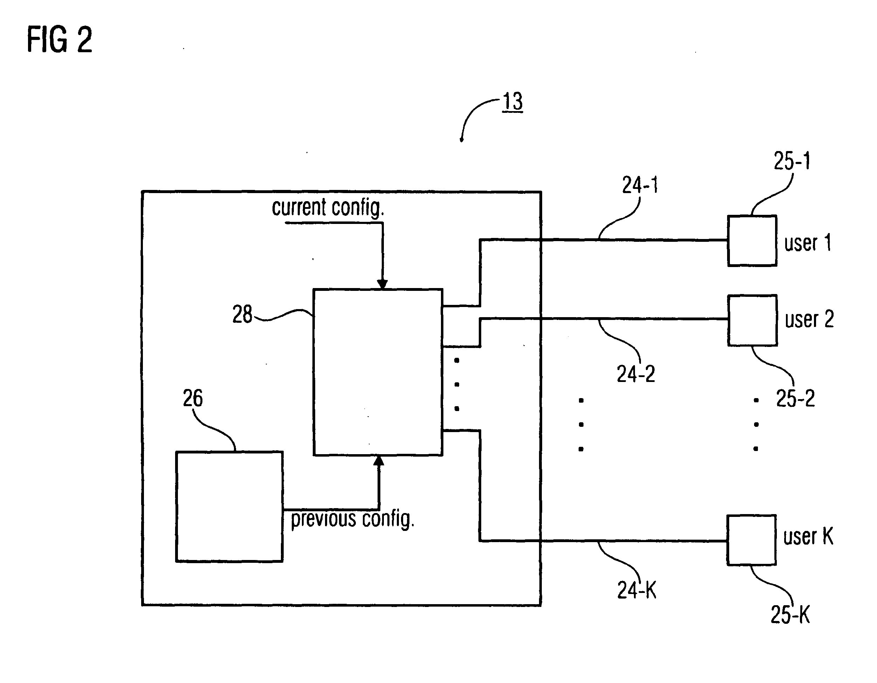

Fig. 2 shows a schematic block diagram of the apparatus 13 for resource allocation among the plurality of users, according to an embodiment of the present invention.

The apparatus 13 may allocate resources for communication links 24-k (k=1,...,K) from the transmit module 11 to each user 25-k (k=1,...,K) of the plurality of users. A configuration of a communication link 24-k may include, for example, the number Sₖ of sub-carriers required by a user k (k=1,...,K), instantaneous channel gains a_{k,n} of each sub-carrier n (n=1,...,N) for user k (k=1,...,K) and a modulation scheme (e.g. M-PSK, M-QAM, etc.) depending on a demanded QoS.

The resource allocation determined by apparatus 13 might change between subsequent resource allocation time intervals, wherein a resource allocation time interval is defined, for example, by an OFDM or OFDMA symbol. In order to store an out-dated resource allocation, the apparatus 13 comprises a memory 26 for storing the out-dated or previous resource allocation associated to a previous communication link configuration. The memory 26 is coupled to an iteration controller 28 to provide the iteration controller 28 with the stored previous communication link configuration comprising information on a previous user scenario. The iteration controller 28 is configured to perform an iteration based on an optimization criterion and an initial resource allocation to determine an optimized resource allocation for the current communication link configuration by using a stored previous resource allocation from the memory 26 as the initial resource allocation for the iteration process.

In case of fast-varying subsequent communication link configurations from one resource allocation time interval to the next, the current communication link configuration might be completely different from a preceding communication link configuration. This is, for example, the case when high mobility users are in the communications system, if there is a high user fluctuation or if there are highly-varying data rate requirements of the plurality of users 25-k (k=1,...,K) between subsequent resource allocation time intervals. In case of high mobility users, the instantaneous channel gains a_{k,n} of each sub-carrier n (n=1, ..., N) for each user k (k=1, ..., K) may be quite different from one resource allocation time interval to the next one.

After an initial start-up the transmit module 11, the memory 26 will be empty and, therefore, not hold any previous resource allocations or communication link configurations. In this case, the module 13 performs a conventional initial resource allocation for the first resource allocation time interval. In case of a multiple access downlink OFDM transmission, said first resource allocation can be performed as it is, for example, described in "A Real-time Sub-carrier Allocation Scheme for Multiple Access Downlink OFDM Transmission", Wong et al., 1999. According to this sub-carrier allocation algorithm, sub-carriers are assigned to the plurality of users 25-k (k=1, ...,K) in a way that a total transmit power for communicating with all of the plurality of users is minimized. In other words, here, the optimization criterion for the sub-carrier allocation is the minimization of the total transmit power. The resulting first iterative sub-carrier allocation and the associated communication link scenario or configuration can then be stored in the memory 26 for use in a subsequent resource allocation time interval.

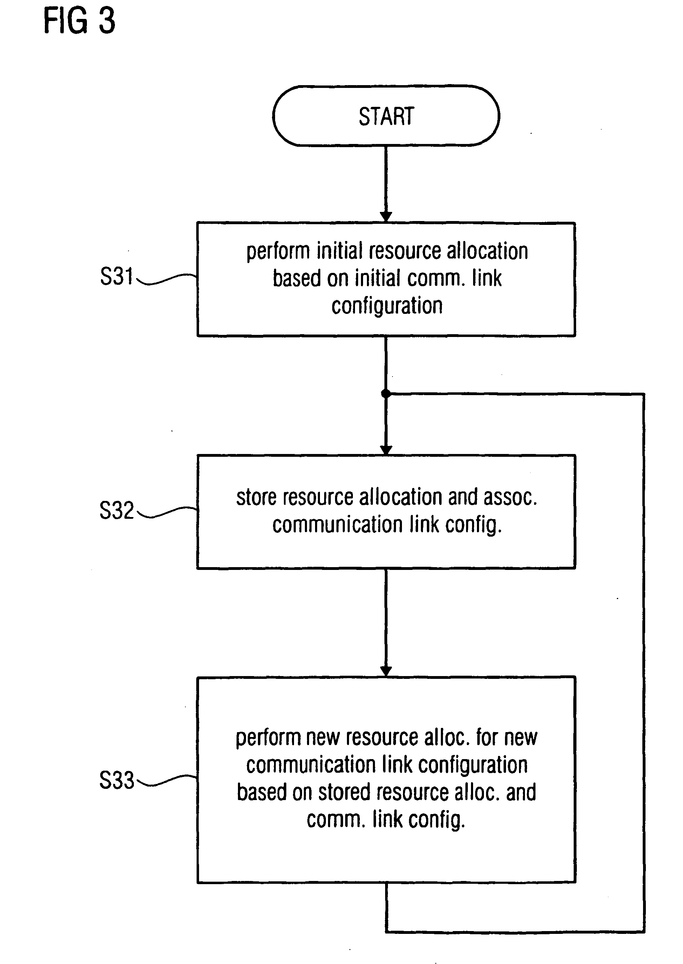

The step of determining a first resource allocation, for example, after a power-up of the transmit module 11, is referred to as step S31 in the schematic flow chart of Fig. 3.

Fig. 3 shows a method for resource allocation among a plurality of users for a current communication link configuration in a communications system, according to an embodiment of the present invention.

At the very beginning, i.e., in case no previous resource allocation is available in the memory 26, a first resource allocation based on first communication link configuration is performed in a first step S31. In a next step S32, the previously determined first resource allocation and the associated previous communication link configuration are both stored in memory 26 in order to have access to both in a next step. In the next step S33, which corresponds to a subsequent or next resource allocation time interval, a new resource allocation for a new communication link configuration is performed based on the stored resource allocation and its associated previous communication link configuration. After that, step S32 is repeated, such that the latest determined resource allocation for the latest communication link configuration is again stored in the memory 26 to serve as previous quantities for the next resource allocation time interval.

In the inventive method shown in Fig. 3, a current resource allocation is always determined based on a stored previous resource allocation, such that the stored previous resource allocation is used as an initial resource allocation for an iterative allocation process. In other words, it is assumed that the previous resource allocation serves as a good starting point for determining the current resource allocation. This may hold true for the case that communication link configurations comprising channel coefficients α_{k,n}, data rate requirements, number of users K, etc., do not change between subsequent resource allocation time intervals, for example, subsequent OFDMA symbols. However, in case subsequent communication link configurations change in a non-neglectable manner between subsequent resource allocation time intervals, it might not be a good idea to take the previous resource allocation as the initial resource allocation for the current resource allocation iteration of the current resource allocation time interval.

In order to decide whether a previous resource allocation should serve as an initial resource allocation for a current resource allocation iteration, the iteration controller 28 comprises, according to embodiments of the present invention, a comparator for comparing the current communication link configuration with the stored previous communication link configuration, such that, depending on a comparison result of the comparator, either the stored previous resource allocation is used as the initial resource allocation or an initial resource allocation is computed from scratch in a conventional way (e.g. according to "A Real-time Sub-carrier Allocation Scheme for Multiple Access Downlink OFDM Transmission", Wong et al.). For this reason, the comparator may be configured to determine a correlation between the current communication link configuration and the previous communication link configuration and to compare a correlation result with a predefined threshold value. In case the correlation result exceeds the predefined threshold value, the stored previous resource allocation is used as the initial resource allocation for the current communication link configuration. Otherwise, that is, if the correlation result falls below the predefined threshold value, the initial resource allocation for the current communication link configuration is computed from scratch in a conventional way, as has been described before.

According to embodiments of the present invention, the correlation between the current communication link configuration and the previous communication link configuration may be determined based on channel state information (CSI) or channel coefficients a_{k,n} of communication channels to and/from the plurality of users. That is, the channel gains a_{k,n}[m-i] of each sub-carrier n (n=1,...,N) for every user k (k=1,...,K) of the previous resource allocation time interval m-i (e.g. OFDMA symbol) are correlated to the channel gains α_{k,n}[m] of each sub-carrier n (n=1, ...,N) four every user k (k=1,...,K) of the current resource allocation time interval m according to a given correlation metric. Of course, also other physical layer (PHY) parameters can be used for a computation of a correlation metric as, for example, a signal-to-noise ratio SNR_{k,n} of each sub-carrier n (n=1,...,N) for every user k (k=1,...,K). In addition, a correlation of further parameters is conceivable. For example, a correlation between the current communication configuration and the previous communication link configuration may also be determined based on a user's queue length in the data link layer (DLL). Additionally, the correlation between the current communication link configuration and the previous communication link configuration may be determined based on QoS parameters for each of the plurality of users 25-k (k=1,...,K) as, for example, demanded data rates or limiting values for error rates. Such error rates may, for example, be maximum tolerable bit error rates (BER) for each of the plurality of users. Typically, QoS parameters depend on the demanded services by the individual users. A user demanding for a real-time high data rate service, such as a video call, typically will have to be allocated more resources than a user with only low bandwidth requirements.

The more communication link configuration parameters, such as PHY parameters, DLL parameters or QoS parameters of subsequent resource allocation time intervals are correlated with each other, the more accurately can be determined whether a previous resource allocation is a good starting point for a current resource allocation iteration or not.

According to embodiments of the present invention, the memory or storage 26 may be configured to not only hold one previous resource allocation and its associated communication link configuration, but to store a plurality of previous scenarios. By correlating each of the stored previous communication link configuration with the current communication link configuration, it is possible to determine a best-fitting previous communication link configuration. Thereby, the best-fitting previous communication link configuration yields the highest correlation metric when correlating it with the current communication link scenario. However, the highest correlation metric alone does not guarantee that the related previous best-fitting resource allocation serves as a good initial value for the current resource allocation iteration. For this reason, the maximum correlation metric of the best-fitting previous communication link configuration may be compared to a predefined threshold value according to embodiments of the present invention. If the highest correlation metric exceeds the predefined threshold, the best-fitting previous resource allocation is used as the initial resource allocation for the current resource allocation iteration. However, if the highest correlation metric falls below the predefined threshold, a conventional resource allocation initialization is performed instead.

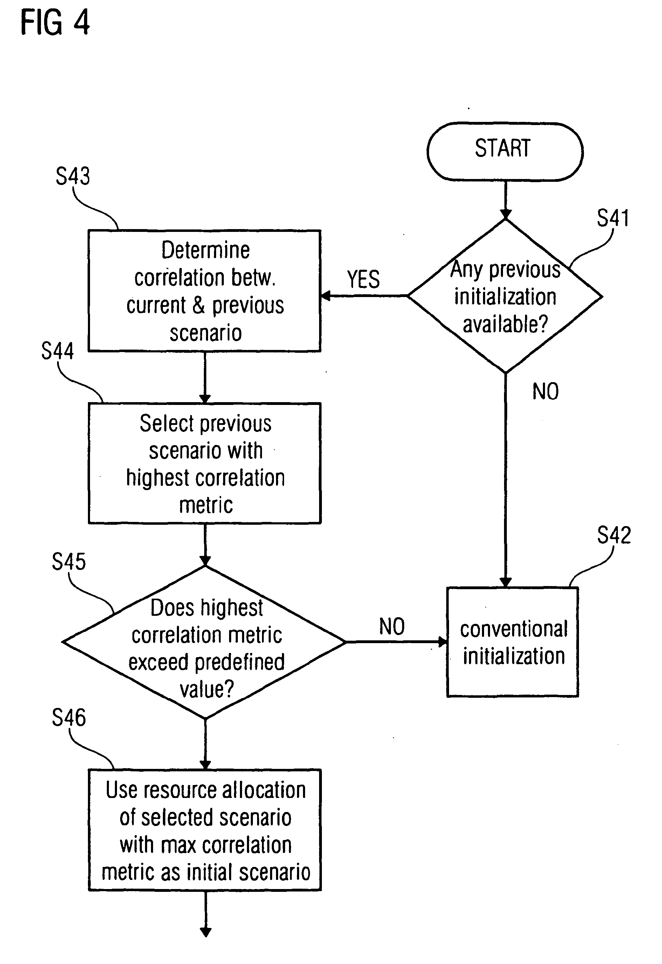

This algorithm is schematically depicted in the flow chart of Fig. 4.

In each resource allocation time interval, it is determined in a step S41 whether any previous resource allocation is available in the memory 26. In case no such previous resource allocation of a previous resource allocation time interval is available, a conventional resource allocation initialization is performed in a step S42. This conventional resource allocation initialization S42 may, for example, be done as described in the paper of Wong et al. However, in case there are previous resource allocations available in the memory 26, correlation metrics between the current and the stored previous communication link configurations are determined in step S43. Thereby, the correlation metric between the current and a previous scenarios may, for example, be based on demanded QoS, DLL states and/or PHY states for the plurality of users. In case the correlated scenarios comprise the same users, similar CSI per sub-carrier and similar data rates required for each user k (k=1,...,K), then it is likely that there will be a relatively high correlation between the two communication link configurations. In step S43, the current communication link configuration is correlated with each of the stored previous communication link configurations. In a subsequent step S44, the previous communication link configuration with the highest correlation metric is determined. It is then determined in step S45 whether the highest correlation metric of this best-fitting previous communication link configuration exceeds a predefined limit or threshold value. In case the threshold is not exceeded, this is an indication for the fact that the best-fitting previous communication link configuration differs too strongly from the current configuration link configuration and, hence, is not a good starting point for the resource allocation for the current resource allocation time interval. For this reason, it is better to start with the current resource allocation from scratch, which may be done in a conventional way (for example, see Wong et al.) in step S42. However, in case the correlation metric of the best-fitting previous communication link configuration does exceed the predetermined threshold value, the previous resource allocation associated to the best-fitting previous communication link configuration is chosen as the initial resource allocation for the resource allocation iteration of the current resource allocation time interval in step S46.

In the current resource allocation time interval the iterative improvement of the initial resource allocation may be done, for example, as described by Wong et al. E.g., an initial sub-carrier allocation may be improved by iterative swapping of the sub-carriers between users to reduce the total transmit power. In each iteration, it is tried to swap sub-carriers allocated between two users, such that the total transmit power is reduced. In order to select the pairs of users and the corresponding sub-carriers to swap a cost function for swapping two users may be calculated. For each pair of users k,j, a power reduction factor p_{k,j} is calculated, which is equal to a sum of Δp_{k,j} and Δp_{j,k}, where Δp_{k,j} denotes a maximum power reduction over all sub-carriers that have been allocated to user k if a sub-carrier allocated to user k is re-allocated to user j instead. Nₖⱼ denotes the sub-carrier that maximizes the power reduction. All the power reduction factors may be sorted in descending order and the first one in the list is picked. If the first pₖⱼ is positive, then the sub-carrier allocation is changed by swapping sub-carrier nₖⱼ from user k to user j and sub-carrier nⱼₖ from user j to user k. The values of all p_{k,j} are updated after the swapping and then a further iteration step is started. The iteration stops when all the power reduction factors are negative. That means that the total transmit power cannot be reduced any further by swapping the sub-carrier allocation of two users k, j≠k (k=1,...,K; j=1,...,K).

Of course, the sub-carrier allocation described by Wong et al. is only one of many possible resource allocation schemes that maybe employed in step S42. For example, another alternative for resource allocation is to maximize the overall data rate for communicating with the plurality of users 25-k (k=1,...,K) given a predefined overall transmit power. Hence, in this case, the optimization criterion would comprise the maximization of the overall data rate.

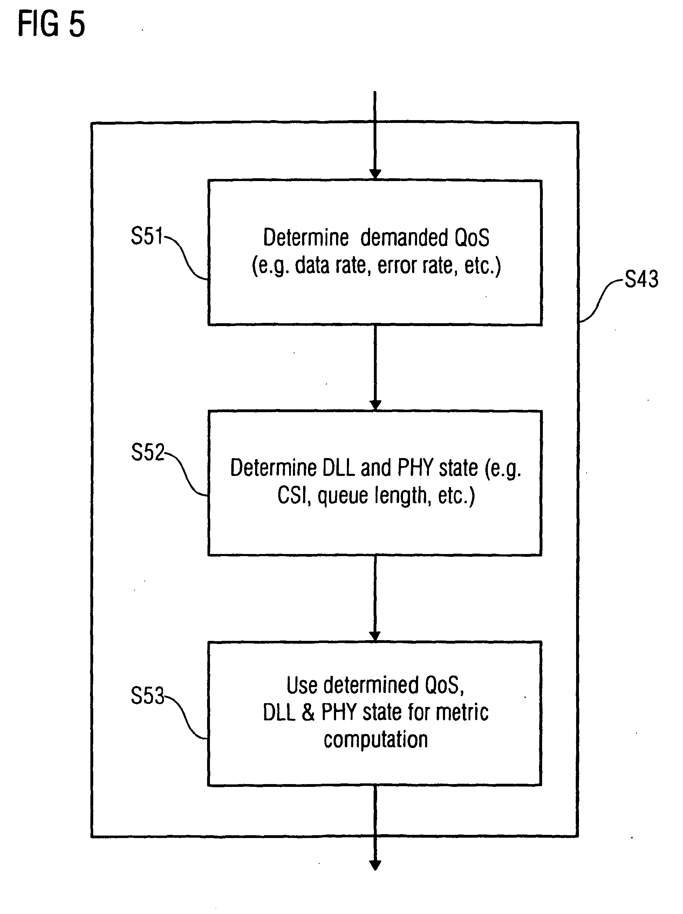

An exemplary version of step S43 is described in more detail in Fig. 5.

In a first sub-step S51, a demanded QoS is determined based on the current communication link configuration or user scenario. Thereby, the demanded QoS may include data rates, error rates, etc. for all of the plurality of users. In a second sub-step S52, DLL- and PHY-states are determined for the current communication link configuration. Such information may include channel state information α_{k,n}[m] of each sub-carrier n (n=1, ..., N) for every user k (k=1,...,K) of the current resource allocation time interval m, queue lengths for all of the plurality of users, etc. In a further sub-step S53, the determined quantities of substeps S51 and S52 may be used for computing correlation metrics with corresponding quantities of stored previous communication link configurations in order to determine the best-fitting previous configuration link configuration.

If the best-fitting previous configuration link configuration has been found, its stored associated resource allocation in terms of slot/sub-carrier assignment, bit loading, power loading, etc. may be used as the initial resource allocation for the current resource allocation time interval. As described above, the initial resource allocation may be determined from scratch in case no previous configuration link scenario is available or the correlation between previous configuration link scenarios and the current configuration link scenario does not exceed the predefined threshold.

After various embodiments of the present invention have been described in the foregoing, some advantages of the present invention over state-of-the-art scheduling algorithms shall be outlined in the sequel.

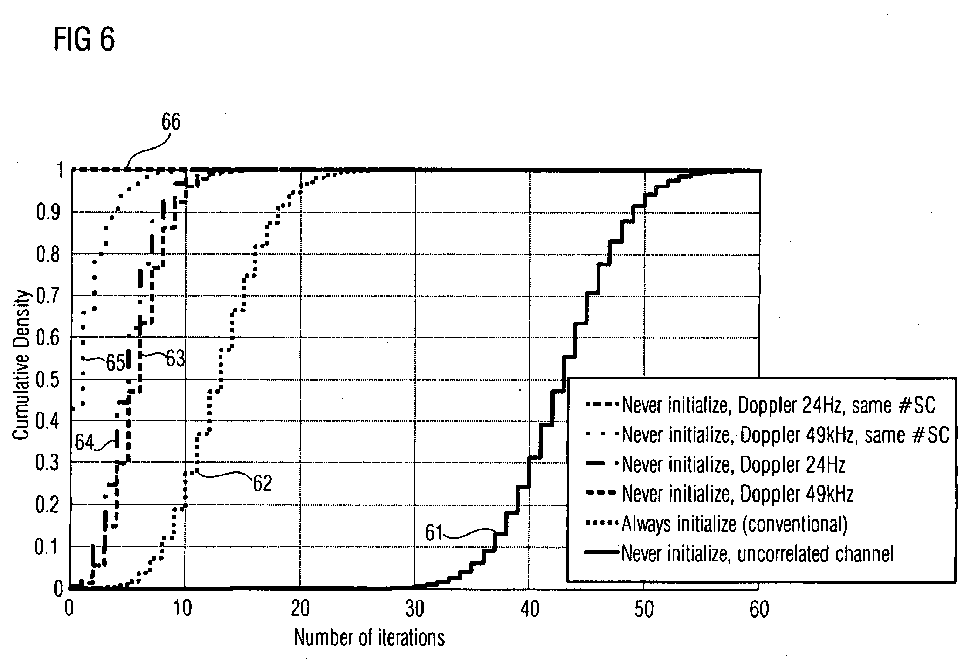

Referring now to Fig. 6, six curves are shown, which shall qualitatively demonstrate the reduced complexity of the inventive iterative resource allocation concept. Fig. 6 depicts a cumulative probability density versus a number of iterations needed to meet a specified optimization criterion. Hence, it can be seen from Fig. 6 with which probability an iteration process ends after the related number of iterations.

Curve 61 relates to a scenario where a conventional initial resource allocation according to step S42 is never performed. That means, in the case of curve 61, the method according to Fig. 3 is used. Further, the channel coefficients of the different sub-carriers are uncorrelated from one resource allocation time interval to the next resource allocation time interval, for example, from one OFDMA symbol to the next OFDMA symbol. Although a previous resource allocation is always used as the initial resource allocation, the method in this case requires quite a large number of iterations until it arrives at the optimum or near-to optimum resource allocation. This is due to the uncorrelated channel coefficients from one resource allocation time interval to the next resource allocation time interval. However, uncorrelated channel coefficients between subsequent resource allocation time intervals are rather unlikely in practical scenarios.

The other extreme, that is determining an initial resource allocation in a conventional way for each resource allocation time interval, is depicted by curve 62. In this case, in each resource allocation time interval, the related resource allocation is determined from scratch independent on whether the channel coefficients of subsequent resource allocation time intervals are correlated or not. In case of uncorrelated channel coefficients from one resource allocation time interval to the next one, the conventional initialization for the iterative resource allocation performs better than embodiments of the present invention. However, advantages of the present invention become evident when looking at more practical scenarios depicted by curves 63, 64, 65 and 66.

Curve 63 denotes a scenario with subsequent channel link configurations that have a certain correlation to each other. Here, channel coefficients change according to a Doppler frequency of 49 KHz, which corresponds to rather fast moving users. In addition, each of the plurality of users 25-k (k=1,...,K) can be allocated a different number Sₖ of sub-carriers in subsequent resource allocation time intervals. Applying the inventive method according to Fig. 3 to this scenario leads to the curve 63, which clearly indicates that a smaller number of iterations is needed to arrive at the optimum or close-to-optimum resource allocation when using a stored previous resource allocation as the initial resource allocation for the current time interval.

In case the channel coefficients are even more correlated to each other in subsequent time intervals, for example, according to a lower Doppler frequency of 24 Hz, even less iterations are needed (curve 64).

Curve 65 describes a scenario where channel coefficients α_{k,n} (n=1,...,N; k=1,...,K) change with a Doppler frequency of 49 KHz from one resource allocation time interval to the next one and wherein each of the plurality of users 25-k (k=1,...,K) is always assigned the name number Sₖ (k=1,...,K) of sub-carriers in subsequent resource allocation time intervals. This scenario further reduces the number of required iterations compared to the conventional method according to curve 62. In case of highly correlated channel coefficients (Doppler frequency 24 Hz) and the same number of sub-carriers assigned to each of the plurality of users 25-k (k=1,....K) in subsequent resource allocation time intervals, curve 66 indicates that almost no iterations are needed in order to arrive at the final resource allocation for the current time interval when using the inventive method according to Fig. 3.

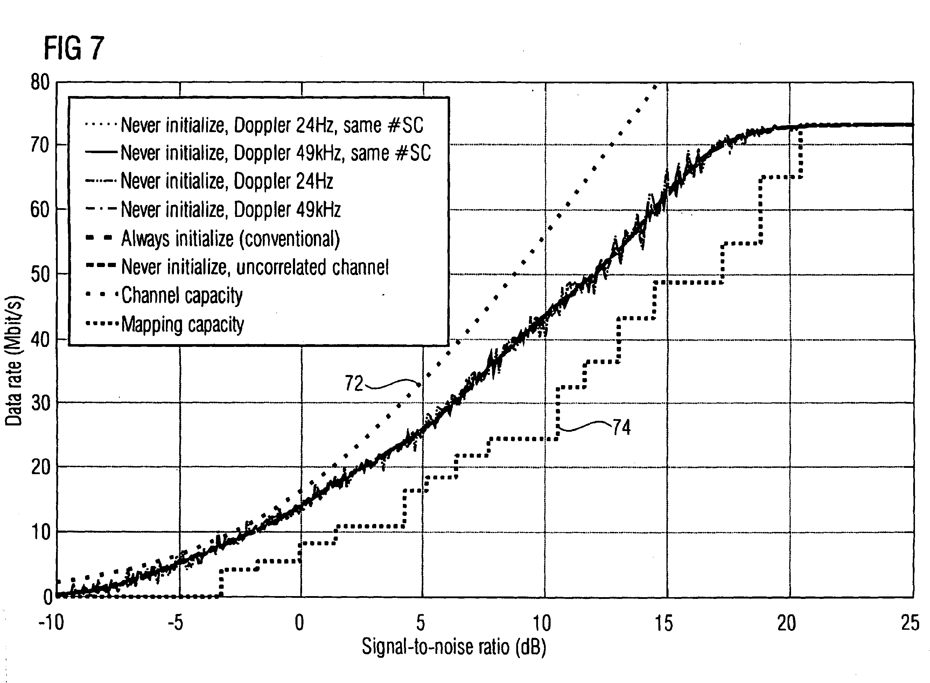

Fig. 7 shows data rates versus a signal-to-noise ratio achievable with the methods described in Fig. 6.

It can be seen that all the described scheduling schemes deliver approximately the same data rates to the plurality of users, wherein the data rates lie between a mapping capacity 71 serving as a lower bound and the channel capacity 72 serving as an upper bound for the achievable data rates.

To summarize, resource allocation algorithms according to embodiments of the present invention can be used in schedulers for scheduling resources in communications systems. It has been shown, that embodiments of the present invention can reduce the complexity of conventional iterative scheduling algorithms by applying a previous resource allocation associated to a best-fitting previous communication link configuration as an initial resource allocation. By performing a correlation between a current communication link configuration and the previous communication link configuration, it can be ensured that the previous communication link configuration is only used if it fits the current communication link configuration to a certain extent. Hence, a correlation metric avoids a worse case of complexity increase. Instead of only iteratively swapping sub-carriers to reduce the overall transmit power, embodiments of the present invention also allow to iteratively swapping sub-carriers to increase the overall data rate. Depending on subsequent communication link configurations, embodiments of the present invention allow a significant complexity reduction.

Depending on the circumstances, the inventive methods may be implemented in hardware or in software. The implementation may be done on a digital storage medium, particularly a disc or a CD with electronically readable control signals, which may co-operate with a programmable computer system, such that the method is executed. In general, the invention does also consist in a computer program product with a program code stored on a machine-readable carrier for performing the inventive method when the computer program product runs on a computer. In other words, the invention may, thus, be realized as a computer program with a program code for performing the method when the computer program runs on a computer and/or microcontroller.

## Claims

1. Apparatus (13) for resource allocation among a plurality of users (25-k) for a current communication link configuration in a communications system, the apparatus comprising:
a memory (26) for storing a previous resource allocation associated to a previous communication link configuration;
an iteration controller (28) for performing an iteration based on an optimization criterion and an initial resource allocation, wherein the iteration controller is configured to determine an optimized resource allocation for the current communication link configuration, the optimized resource allocation meeting the optimization criterion,
**characterized in that**
the iteration controller (28) comprises a comparator for comparing the current communication link configuration to the stored previous communication link configuration, such that, depending on a comparison result of the comparator, either the stored previous resource allocation is used as the initial resource allocation or an initial resource allocation is computed from scratch.

2. The apparatus according to claim 1, wherein the comparator is configured to determine a correlation between the current communication link configuration and the previous communication link configuration and to compare this correlation to a predefined correlation threshold.

3. The apparatus according to claim 2, wherein the iteration controller (28) is configured to use the stored previous resource allocation as the initial resource allocation for the current communication link configuration in case a correlation result exceeds the predefined correlation threshold.

4. The apparatus according to claim 2, wherein the comparator is configured to determine the correlation between the current communication link configuration and the previous communication link configuration based on a channel state information of communication channels to and/or from the plurality of users.

5. The apparatus according to one of claims 2 to 4, wherein the comparator is configured to determine the correlation between the current communication link configuration and the previous communication link configuration based on a queue length of data queues of the plurality of users.

6. The apparatus according to one of claims 2 to 5, wherein the comparator is configured to determine the correlation between the current communication link configuration and the previous communication link configuration based on a configuration of a quality of service demanded by the plurality of users, wherein each user demands an individual quality of service.

7. The apparatus according to claim 6, wherein the comparator is configured to determine the quality of service by individual data rate demands by the plurality of users.

8. The apparatus according to claim 6, wherein the comparator is configured to determine the quality of service by individual maximum data rates allowed by each of the plurality of users.

9. The apparatus according to one of the preceding claims, wherein the apparatus (13) is configured to allocate resources for the plurality of users (25-k) in a multiple access communications system (10).

10. The apparatus according to claim 9, wherein the multiple access communications system is an Orthogonal Frequency-Division Multiple Access, OFDMA, communications system.

11. The apparatus according to claim 10, wherein the apparatus (13) is configured to allocate sub-carriers to each of the plurality of users (25-k) based on a resource allocation result of the iteration.

12. The apparatus according to one of the preceding claims, wherein the iteration controller (28) is configured to perform the iteration in order to minimize an overall transmit power needed for communicating with all of the plurality of users.

13. The apparatus according to one of the preceding claims, wherein the iteration controller (28) is configured to perform the iteration in order to maximize an overall data rate for communicating with all of the plurality of users.

14. The apparatus according to one of the preceding claims, wherein the apparatus (13) is configured to individually allocate modulation schemes to each of the plurality of users (25-k) based on a resource allocation result of the iteration.

15. Method for resource allocation among a plurality of users (25-k) for a current communication link configuration in a communications system, the method comprising:
storing (S32) a previous resource allocation associated to a previous communication link configuration;
performing an iteration (S33) based on an optimization criterion and an initial resource allocation for determining an optimized resource allocation for the current communication link configuration, the optimized resource allocation meeting the optimization criterion,
**characterized in that**
the current communication link configuration is compared to the stored previous communication link configuration, such that, depending on a comparison result, either the stored previous resource allocation is used as the initial resource allocation or an initial resource allocation is computed from scratch.

16. Computer program for performing all the steps of the method according to claim 15, when the computer program is executed on a computer and/or microcontroller.

## Patentansprüche

1. Vorrichtung (13) zur Ressourcenzuteilung unter einer Mehrzahl von Benutzern (25-k) für eine aktuelle Kommunikationsverbindungskonfiguration in einem Kommunikationssystem, wobei die Vorrichtung folgende Merkmale aufweist:
einen Speicher (26) zum Speichern einer vorhergehenden Ressourcenzuteilung, die einer vorhergehenden Kommunikationsverbindungskonfiguration zugeordnet ist;
eine Iterationssteuerung (28) zum Durchführen einer Iteration basierend auf einem Optimierungskriterium und einer anfänglichen Ressourcenzuteilung, wobei die Iterationssteuerung konfiguriert ist, um eine optimierte Ressourcenzuteilung für die aktuelle Kommunikationsverbindungskonfiguration zu bestimmen, wobei die optimierte Ressourcenzuteilung das Optimierungskriterium erfüllt,
**dadurch gekennzeichnet, dass**
die Iterationssteuerung (28) einen Komparator aufweist zum Vergleichen der aktuellen Kommunikationsverbindungskonfiguration mit der gespeicherten vorhergehenden Kommunikationsverbindungskonfiguration, derart, dass abhängig von einem Vergleichsergebnis des Komparators entweder die gespeicherte vorhergehende Ressourcenzuteilung als die anfängliche Ressourcenzuteilung verwendet wird oder eine anfängliche Ressourcenzuteilung ohne Vorgabe berechnet wird.

2. Die Vorrichtung gemäß Anspruch 1, bei der der Komparator konfiguriert ist, um eine Korrelation zwischen der aktuellen Kommunikationsverbindungskonfiguration und der vorhergehenden Kommunikationsverbindungskonfiguration zu bestimmen und diese Korrelation mit einer vordefinierten Korrelationsschwelle zu vergleichen.

3. Die Vorrichtung gemäß Anspruch 2, bei der die Iterationssteuerung (28) konfiguriert ist, um die gespeicherte vorhergehende Ressourcenzuteilung als die anfängliche Ressourcenzuteilung für die aktuelle Kommunikationsverbindungskonfiguration zu verwenden, falls ein Korrelationsergebnis die vordefinierte Korrelationsschwelle überschreitet.

4. Die Vorrichtung gemäß Anspruch 2, bei der der Komparator konfiguriert ist, um die Korrelation zwischen der aktuellen Kommunikationsverbindungskonfiguration und der vorhergehenden Kommunikationsverbindungskonfiguration basierend auf einer Kanalzustandsinformation von Kommunikationskanälen zu und/oder von der Mehrzahl von Benutzern zu bestimmen.

5. Die Vorrichtung gemäß einem der Ansprüche 2 bis 4, bei der der Komparator konfiguriert ist, um die Korrelation zwischen der aktuellen Kommunikationsverbindungskonfiguration und der vorhergehenden Kommunikationsverbindungskonfiguration basierend auf einer Warteschlangenlänge von Datenwarteschlangen der Mehrzahl von Benutzern zu bestimmen.

6. Die Vorrichtung gemäß einem der Ansprüche 2 bis 5, bei der der Komparator konfiguriert ist, um die Korrelation zwischen der aktuellen Kommunikationsverbindungskonfiguration und der vorhergehenden Kommunikationsverbindungskonfiguration basierend auf einer Konfiguration einer Dienstqualität, die durch die Mehrzahl von Benutzern gefordert wird, zu bestimmen, wobei jeder Benutzer eine einzelne Dienstqualität fordert.

7. Die Vorrichtung gemäß Anspruch 6, bei der der Komparator konfiguriert ist, um die Dienstqualität durch einzelne Datenratenforderungen durch die Mehrzahl von Benutzern zu bestimmen.

8. Die Vorrichtung gemäß Anspruch 6, bei der der Komparator konfiguriert ist, um die Dienstqualität durch einzelne maximale Datenraten zu bestimmen, die durch jeden der Mehrzahl von Benutzern erlaubt sind.

9. Die Vorrichtung gemäß einem der vorhergehenden Ansprüche, wobei die Vorrichtung (13) konfiguriert ist, um Ressourcen für die Mehrzahl von Benutzern (25-k) in einem Mehrfachzugriff-Kommunkationssystem (10) zuzuteilen.

10. Die Vorrichtung gemäß Anspruch 9, bei der das Mehrfachzugriff-Kommunikationssystem ein Orthogonal-Frequenzteilung-Mehrfachzugriff Kommunikationssystem, OFDMA-Kommunikationssystem, ist.

11. Die Vorrichtung gemäß Anspruch 10, wobei die Vorrichtung (13) konfiguriert ist, um jedem der Mehrzahl von Benutzern (25-k) basierend auf einem Ressourcenzuteilungsergebnis der Iteration Teilträger zuzuteilen.

12. Die Vorrichtung gemäß einem der vorhergehenden Ansprüche, bei der die Iterationssteuerung (28) konfiguriert ist, um die Iteration durchzuführen, um eine Gesamtsendeleistung zu minimieren, die zum Kommunizieren mit allen der Mehrzahl von Benutzern benötigt wird.

13. Die Vorrichtung gemäß einem der vorhergehenden Ansprüche, bei der die Iterationssteuerung (28) konfiguriert ist, um die Iteration durchzuführen, um eine Gesamtdatenrate zum Kommunizieren mit allen der Mehrzahl von Benutzern zu maximieren.

14. Die Vorrichtung gemäß einem der vorhergehenden Ansprüche, wobei die Vorrichtung (13) konfiguriert ist, um jedem der Mehrzahl von Benutzern (25-k) basierend auf einem Ressourcenzuteilungsergebnis der Iteration Modulationsschemata einzeln zuzuteilen.

15. Verfahren zur Ressourcenzuteilung unter einer Mehrzahl von Benutzern (25-k) für eine aktuelle Kommunikationsverbindungskonfiguration in einem Kommunikationssystem, wobei das Verfahren folgende Schritte aufweist:
Speichern (S32) einer vorhergehenden Ressourcenzuteilung, die einer vorhergehenden Kommunikationsverbindungskonfiguration zugeordnet ist;
Durchführen einer Iteration (S33) basierend auf einem Optimierungskriterium und einer anfänglichen Ressourcenzuteilung zum Bestimmen einer optimierten Ressourcenzuteilung für die aktuelle Kommunikationsverbindungskonfiguration, wobei die optimierte Ressourcenzuteilung das Optimierungskriterium erfüllt,
**dadurch gekennzeichnet, dass**
die aktuelle Kommunikationsverbindungskonfiguration mit der gespeicherten vorhergehenden Kommunikationsverbindungskonfiguration verglichen wird, derart, dass abhängig von einem Vergleichsergebnis entweder die gespeicherte vorhergehende Ressourcenzuteilung als die anfängliche Ressourcenzuteilung verwendet wird oder eine anfängliche Ressourcenzuteilung ohne Vorgabe berechnet wird.

16. Computerprogramm zum Durchführen aller Schritte des Verfahrens gemäß Anspruch 15, wenn das Computerprogramm auf einem Computer und/oder Microcontroller ausgeführt wird.

## Revendications

1. Appareil (13) d'attribution de ressources entre une pluralité d'utilisateurs (25-k) pour une configuration de liaison de communication actuelle dans un système de communications, l'appareil comprenant:
une mémoire (26) destinée à mémoriser une attribution de ressources antérieure associée à une configuration de liaison de communication antérieure;
un contrôleur d'itération (28) destiné à effectuer une itération sur base d'un critère d'optimisation et d'une attribution de ressources initiale, où le contrôleur d'itération est configuré pour déterminer une attribution de ressources optimisée pour la configuration de liaison de communication actuelle, l'attribution de ressources optimisée remplissant le critère d'optimisation,
**caractérisé par le fait que**
le contrôleur d'itération (28) comprend un comparateur destiné à comparer la configuration de liaison de communication actuelle avec la configuration de liaison de communication antérieure mémorisée, de sorte que, en fonction d'un résultat de comparaison du comparateur, soit l'attribution de ressources antérieure mémorisée est utilisée comme attribution de ressources initiale, soit une attribution de ressources initiale est calculée à partir de la mémoire de travail.

2. Appareil selon la revendication 1, dans lequel le comparateur est configuré pour déterminer une corrélation entre la configuration de liaison de communication actuelle et la configuration de liaison de communication antérieure et pour comparer cette corrélation avec un seuil de corrélation prédéfini.

3. Appareil selon la revendication 2, dans lequel le contrôleur d'itération (28) est configuré pour utiliser l'attribution de ressources antérieure mémorisée comme attribution de ressources initiale pour la configuration de liaison de communication actuelle au cas où un résultat de corrélation excède le seuil de corrélation prédéfini.

4. Appareil selon la revendication 2, dans lequel le comparateur est configuré pour déterminer la corrélation entre la configuration de liaison de communication actuelle et la configuration de liaison de communication antérieure sur base d'une information d'état de canaux de communication vers et/ou de la pluralité d'utilisateurs.

5. Appareil selon l'une des revendications 2 à 4, dans lequel le comparateur est configuré pour déterminer la corrélation entre la configuration de liaison de communication actuelle et la configuration de liaison de communication antérieure sur base d'une longueur des queues de données de la pluralité d'utilisateurs.

6. Appareil selon l'une des revendications 2 à 5, dans lequel le comparateur est configuré pour déterminer la corrélation entre la configuration de liaison de communication actuelle et la configuration de liaison de communication antérieure sur base d'une configuration d'une qualité de service demandée par la pluralité d'utilisateurs, où chaque utilisateur demande une qualité de service individuelle.

7. Appareil selon la revendication 6, dans lequel le comparateur est configuré pour déterminer la qualité de service par les demandes de débit de données individuelles de la pluralité d'utilisateurs.

8. Appareil selon la revendication 6, dans lequel le comparateur est configuré pour déterminer la qualité de service par les débits de données maximaux individuels admis par chacun de la pluralité d'utilisateurs.

9. Appareil selon l'une des revendications précédentes, dans lequel l'appareil (13) est configuré pour attribuer les ressources pour la pluralité d'utilisateurs (25-k) dans un système de communications à accès multiples (10).

10. Appareil selon la revendication 9, dans lequel le système de communications à accès multiples est un système de communications à Accès Multiples à Division de Fréquence Orthogonale, OFDMA.

11. Appareil selon la revendication 10, dans lequel l'appareil (13) est configuré pour attribuer des sous-porteuses à chacun de la pluralité d'utilisateurs (25-k) sur base d'un résultat d'attribution de ressources de l'itération.

12. Appareil selon l'une des revendications précédentes, dans lequel le contrôleur d'itération (28) est configuré pour effectuer l'itération afin de minimiser une puissance de transmission d'ensemble requise pour communiquer avec l'ensemble de la pluralité d'utilisateurs.

13. Appareil selon l'une des revendications précédentes, dans lequel le contrôleur d'itération (28) est configuré pour effectuer l'itération afin de maximiser un débit de données d'ensemble pour communiquer avec l'ensemble de la pluralité d'utilisateurs.

14. Appareil selon l'une des revendications précédentes, dans lequel l'appareil (13) est configuré pour attribuer individuellement des schémas de modulation à chacun de la pluralité d'utilisateurs (25-k) sur base d'un résultat d'attribution de ressources de l'itération.

15. Procédé d'attribution de ressources entre une pluralité d'utilisateurs (25-k) pour une configuration de liaison de communication actuelle dans un système de communications, le procédé comprenant:
mémoriser (S32) une attribution de ressources antérieure associée à une configuration de liaison de communication antérieure;
effectuer une itération (S33) sur base d'un critère d'optimisation et d'une attribution de ressources initiale, pour déterminer une attribution de ressources optimisée pour la configuration de liaison de communication actuelle, l'attribution de ressources optimisée remplissant le critère d'optimisation,
**caractérisé par le fait que**
la configuration de liaison de communication actuelle est comparée avec la configuration de liaison de communication antérieure mémorisée, de sorte que, en fonction d'un résultat de comparaison, soit l'attribution de ressources antérieure mémorisée est utilisée comme attribution de ressources initiale, soit une attribution de ressources initiale est calculée à partir de la mémoire de travail.

16. Programme d'ordinateur pour réaliser toutes les étapes du procédé selon la revendication 15 lorsque le programme d'ordinateur est exécuté sur un ordinateur et/ou un microcontrôleur.
